# EUROPEAN PATENT SPECIFICATION

(11) **EP 3 454 529 B1**
(45) Date of publication and mention of the grant of the patent: **19.08.2020**
(21) Application number: 17910508.5
(22) Date of filing: 13.07.2017
(51) Int. Cl.: H04L 29/08, H04L 29/06

(54) **DATA TRANSMISSION METHOD AND SYSTEM THEREOF**
DATENÜBERTRAGUNGSVERFAHREN UND SYSTEM DAFÜR
PROCÉDÉ DE TRANSMISSION DE DONNÉES ET SYSTÈME ASSOCIÉ

(30) Priority: 03.07.2017 CN 201710532340
(43) Date of publication of application: 13.03.2019
(73) Proprietor: Wangsu Science & Technology Co., Ltd., Shanghai 200030 (CN)
(72) Inventor: CHEN, Xionglin, Shanghai 200030 (CN); LAI, Zhihui, Shanghai 200030 (CN)
(74) Representative: Hanna Moore + Curley
(86) International application number: PCT/CN2017/092752
(87) International publication number: WO 2019/006775

(56) References cited:
- EP-A1- 2 503 759
- CN-A- 101 039 317
- CN-A- 105 930 528
- CN-A- 106 790 324
- US-A1- 2009 024 795
- US-B1- 9 407 716

## Description

### FIELD OF THE DISCLOSURE

The present disclosure relates to the field of computer technologies and, more particularly, relates to a data transmission method and system, a computer storage medium, an edge node device, and an intermediate node device.

### BACKGROUND

Content delivery network (CDN) is built on the Internet, relies on edge servers deployed in various locations, and enables users to obtain desired contents from nearby servers through functional modules of a central platform such as load balancing, content distribution, and scheduling. Thus, the network congestion may be reduced, and the user access response speed and hit rate may be improved.

When an end user requests data from a CDN edge node, the CDN edge node may in turn request the same data from a CDN intermediate node. Currently, it is a common practice for the edge node to send the request to the intermediate node. The intermediate node returns all or a portion of data to the edge node. The edge node stores the data. When another user requests for the same data, the edge node may directly send the stored data to the user. However, under such circumstance, the existing method of data transmission between the edge node and the intermediate node includes the following disadvantages.
(1) For example, a file a.abc.com/a.avi and a file a.bcd.com/a.avi may be exactly the same file. However, a copy of each file may need to be cached in the edge node, which leads to the phenomenon of the storage resource being wasted in the edge node.
(2) Assuming that the file a.abc.com/a.avi is cached in the edge node, and the file a.bcd.com/a.avi is not cached in the edge node. When a user requests for the file a.bcd.com/a.avi, the edge node has to retrieve the file data from the intermediate node, which not only wastes time of data transmission, but also consumes bandwidth of data transmission.

Due to the existence of the above two disadvantages, the efficiency of data transmission is substantially low, which greatly impacts the user experience.

The public disclosure US 9,407,716 B1 discloses that a first device receives from a second device a content request which may include a dynamic network address and a request for a content file.

### BRIEF SUMMARY OF THE DISCLOSURE

To solve the problems in the existing technology, the present disclosure provides an edge node device and a data transmission method thereof, a computer storage medium and a communication device. The technical solutions are described below.

Aspects of the present disclosure are provided according to the claims.

The technical solutions provided by the present disclosure include the following beneficial effects. The edge node and/or the intermediate node uniquely identifies a data file using a signature code of the same. During the data transmission, the signature code in the response data packets is looked up and compared in the local signature code database to determine whether the requested data file matches any cache file to avoid duplicated transmission and duplicated storage of the data file that includes the same content as a cache file. Thus, the storage resource at the edge node and/or the intermediate node may be saved, and the network transmission bandwidth may be saved. When the signature code lookup finds a match, the data transmission speed may be substantially increased.

Moreover, the present disclosure fully utilizes the existing cache files at the edge node and/or the intermediate node. Only one copy of the duplicated cache files may be saved. A cache pointer record that points to the saved copy of the data file may be created for the other cache files corresponding to the same signature code. Thus, the storage resource at the edge node and/or the intermediate node may be further saved.

### BRIEF DESCRIPTION OF THE DRAWINGS

To more clearly illustrate the technical solutions of the present disclosure, the accompanying drawings to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a flow chart of an exemplary data transmission method of an edge node according to disclosed embodiments;
FIG. 2 illustrates an expanded flow chart of S11 shown in FIG. 1;
FIG. 3 illustrates a flow chart of an exemplary data transmission method of an intermediate node according to disclosed embodiments;
FIG. 4 illustrates a schematic diagram of an exemplary data transmission system according to disclosed embodiments;
FIG. 5 illustrates a schematic diagram of an exemplary edge node device according to disclosed embodiments; and
FIG. 6 illustrates a schematic diagram of an exemplary intermediate node device according to disclosed embodiments.

### DETAILED DESCRIPTION

To make the objectives, technical solutions, and advantages of the present disclosure clearer, the following further describes the embodiments of the present disclosure in details with reference to the accompanying drawings. It should be understood that the specific embodiments described herein are only used to explain the present disclosure and are not used to limit the present disclosure.

Detailed illustrations of a data transmission method according to embodiments of the present disclosure are provided hereinafter. The data transmission method may be applied to edge nodes of the CDN.

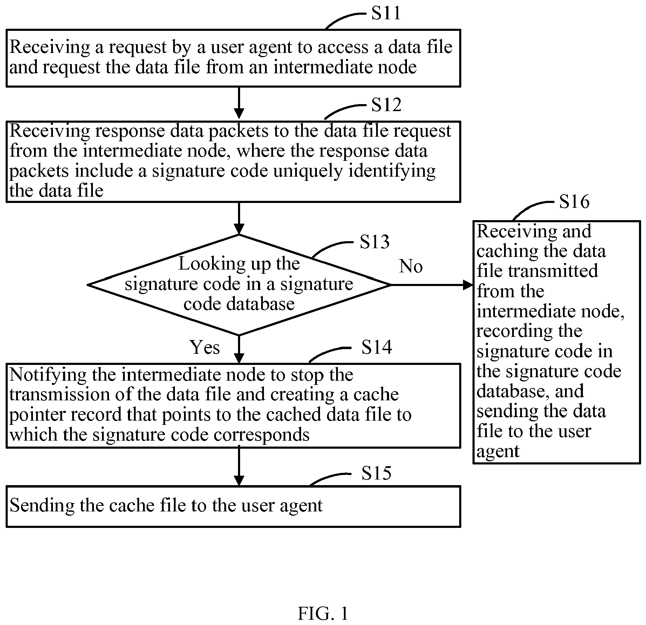

Referring to FIG. 1, FIG. 1 illustrates a flow chart of an exemplary data transmission method of an edge node according to disclosed embodiments.

In one embodiment, the data transmission method of an edge node may be applied to a content delivery network (CDN). The content delivery network may include an edge node and an intermediate node communicating with each other. Both the edge node and the intermediate node may be disposed between an end user and an origin site. The edge node may communicate with the end user, and the intermediate node may communicate with the origin site. Obviously, the edge node and the intermediate node may include various types of servers. For example, the edge node may include an edge server deployed on a user side, and the intermediate node may include an intermediate server deployed on a network side, which is not limited by the present disclosure.

At S11, a request by a user agent to access a data file is received, and the data file is requested from an intermediate node.

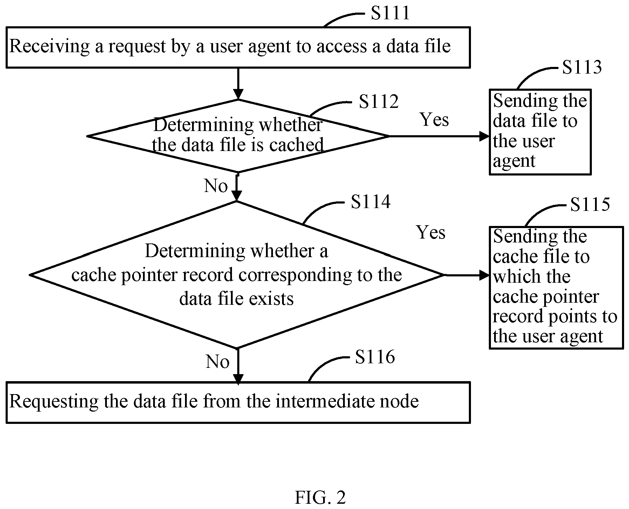

In one embodiment, the step S11 of receiving a request by a user agent to access a data file, and requesting the data file from an intermediate node may include six sub-steps S111-S116 as shown in FIG. 2.

Referring to FIG. 2, FIG. 2 illustrates an expanded flow chart of S11 shown in FIG. 1.

At S111, a request by a user agent to access a data file is received.

In one embodiment, for illustrative purposes, an end user may request to access a data file a.abc.com/a.avi. When the end user needs to access the data file a.abc.com/a.avi, the user agent may first send a request to access the data file a.abc.com/a.avi to the edge node.

At S112, whether the data file is cached is determined.

In one embodiment, after the edge node receives the user agent's request to access the data file a.abc.com/a.avi, the edge node may first determine whether the data file a.abc.com/a.avi is cached.

When it is determined that the data file is cached, at S113, the data file is sent to the user agent.

In one embodiment, when the data file a.abc.com/a.avi is cached, the edge node may directly send the cached data file a.abc.com/a.avi to the user agent.

When it is determined that the data file is not cached, at S114, whether a cache pointer record corresponding to the data file exists is determined.

In one embodiment, when the data file a.abc.com/a.avi is not cached, the edge node may further determine whether a cache pointer record corresponding to the data file a.abc.com/a.avi exists. In one embodiment, the data file a.abc.com/a.avi and the data file a.bcd.com/a.avi may include a completely same content while belonging to different domain names. For example, the data file a.abc.com/a.avi is a data file that the user agent requests from the domain name a.abc.com for the content a.avi, and the data file a.bcd.com/a.avi is a data file that the user agent requests from the domain name a.bcd.com for the same content a.avi. To avoid duplicated storages of the data files having the same content and to save storage resource, when storing in the local hard disk, the edge node may only store the data file a.bcd.com/a.avi as the complete data file and a cache pointer record, but may not store the actual data file a.abc.com/a.avi. The cache pointer record may point to the complete data file a.bcd.com/a.avi. When the data file a.abc.com/a.avi is searched, based on the cache pointer record, the data file a.bcd.com/a.avi may be automatically linked or directed to.

When it is determined that the cache pointer record is present, at S115, the cache file to which the cache pointer record points is sent to the user agent.

In one embodiment, when it is determined that the requested data file a.abc.com/a.avi is absent, but the cache pointer record corresponding to the data file a.abc.com/a.avi is present, it indicates that the edge node may store the cache file a.bcd.com/a.avi having the same content as the data file a.abc.com/a.avi. Based on the cache pointer record, the edge node may find the cache file a.bcd.com/a.avi, and may send the cache file a.bcd.com/a.avi to the user agent in response to the user agent's request to access the data file a.abc.com/a.avi.

When it is determined that the cache pointer record is absent, at S116, the data file is requested from the intermediate node.

When the edge node has neither the requested data file a.abc.com/a.avi nor the cache pointer record corresponding to the data file a.abc.com/a.avi, the edge node may send a request to access the data file a.abc.com/a.avi to the intermediate node with the expectation to obtain the user agent requested data file a.abc.com/a.avi from the intermediate node.

Referring to FIG. 1, at S12, response data packets to the data file request are received from the intermediate node, where the response data packets include a signature code uniquely identifying the data file.

In one embodiment, the edge node may receive the response data packets responding to the request of the data file a.abc.com/a.avi from the intermediate node. The response data packets may include a signature code to uniquely identify the data file a.abc.com/a.avi. To avoid affecting the transmission of the data file, the signature code may be included in the header of the first data packet of the response data packets. The data files having a same content may have a same signature code. For example, the data file a.abc.com/a.avi and the data file a.bcd.com/a.avi may have the same signature code. During the data transmission, the data file may be transmitted in segments. The first data packet that is transmitted first may already include the signature code. Based on the signature code obtained from the first data packet in the response data packets, the edge node may compare the signature code when other data packets of the data file have not been transmitted yet.

At S13, the signature code is looked up in a signature code database.

In one embodiment, the edge node may look up the signature code in a local signature code database.

Generally, when the edge node is not a brand new node, that is, the edge node has already stored certain cache files, it is necessary to calculate the signature codes for the already cache files and perform initialization operations, such that the signature codes may be used to uniquely identify the data files, and may be used in the subsequent signature code lookup and comparison. In one embodiment, the data transmission method of the edge node may further include the following steps.

The signature codes of all or a portion of the cache files may be initialized and calculated. When the signature codes of the cache files in the edge node are duplicated, only one copy of the cache files corresponding to the same signature code may be saved, and cache pointer records may be respectively created for the other cache files corresponding to the same signature code that points to the saved copy of the cache file. As such, the cache files actually having the same content may only occupy the memory space to store one copy of the cache files. The other cache files having the same content may be stored in the form of the cache pointer records, thereby substantially saving the memory space.

In one embodiment, the signature codes may be calculated using a segmented hash algorithm. For example, the process of calculating and initializing the signature codes of all or a portion of the cache files may include the following steps.

The cache file may be divided into a plurality of segments according to a pre-determined segment length. A hash value may be calculated for each segment of the cache file to obtain a plurality of hash values. The plurality of hash values may be sequentially arranged. Another hash calculation may be performed on the plurality of hash values to obtain the signature code of the cache file. The signature codes of all cache files may be stored in the local signature code database in the edge node. The cache files having a same content may be identified by a same signature code.

Referring to FIG. 1, when it is determined that the signature code is present, at S14, the intermediate node is notified to stop the transmission of the data file, and a cache pointer record is created that points to the cache file to which the signature code corresponds.

In one embodiment, regardless of the domain names to which the data files belong, the data files having a same content may be identified by a same signature code. When it is determined that the signature code is present, it indicates that the edge node may store the cache file a.bcd.com/a.avi that has the same content as the requested data file a.abc.com/a.avi. The edge node may notify the intermediate node to stop the transmission of the data file a.abc.com/a.avi, that is, the transmission of the response data packets is stopped and the connection between the edge node and the intermediate node is cut off, to avoid duplicated transmission of the data file, and to save the network bandwidth. A cache pointer record may be created that points to the cache file a.bcd.com/a.avi corresponding to the signature code. When another request to access the data file a.abc.com/a.avi is received, the cache file a.bcd.com/a.avi pointed by the cache pointer record may be used to respond to the user agent directly.

At S15, the cache file is sent to the user agent.

Because the requested data file a.abc.com/a.avi and the cache file a.bcd.com/a.avi cached in the edge node have the same content due to the same signature code, the edge node may send the locally stored cache file a.bcd.com/a.avi to the user agent in response to the user agent's request to access the data file a.abc.com/a.avi.

When it is determined that the signature code is absent, at S16, the data file transmitted from the intermediate node is received and cached. The signature code is recorded in the signature code database, and the data file is sent to the user agent.

In one embodiment, when it is determined that the signature code is absent, it indicates that the edge node may have to obtain and cache the data file a.abc.com/a.avi from the intermediate node. Thus, the edge node may receive and cache the data file a.abc.com/a.avi from the intermediate node, and may record the signature code included in the response data packets at S12 in the local signature code database to identify the data file a.abc.com/a.avi. The signature code may be used to compare with the signature code of the same data file in subsequent requests. The data file a.abc.com/a.avi obtained from the intermediate node may be sent to the user agent.

In the data transmission method provided by the present disclosure, signature codes are used to uniquely identify data files in the edge node. When the edge node is receiving the data transmitted from the intermediate node, the signature code included in the response data packets is looked up and compared in the local signature code database to determine whether the requested data file matches any cache file to avoid duplicated transmission and duplicated storage of the data file that includes the same content as a cache file. Thus, the storage resource at the edge node may be saved, and the network transmission bandwidth between the edge node and the intermediate node may be saved. When the signature code lookup finds a match, the edge node sends the cache file directly to the user agent as the user agent requested data file. The data file transmitted from the intermediate node is no longer needed to return to the user agent. Thus, the data transmission speed may be substantially increased.

Another data transmission method provided by the embodiments of the present disclosure is described below in details. The data transmission method is applicable to the intermediate node of the content delivery network.

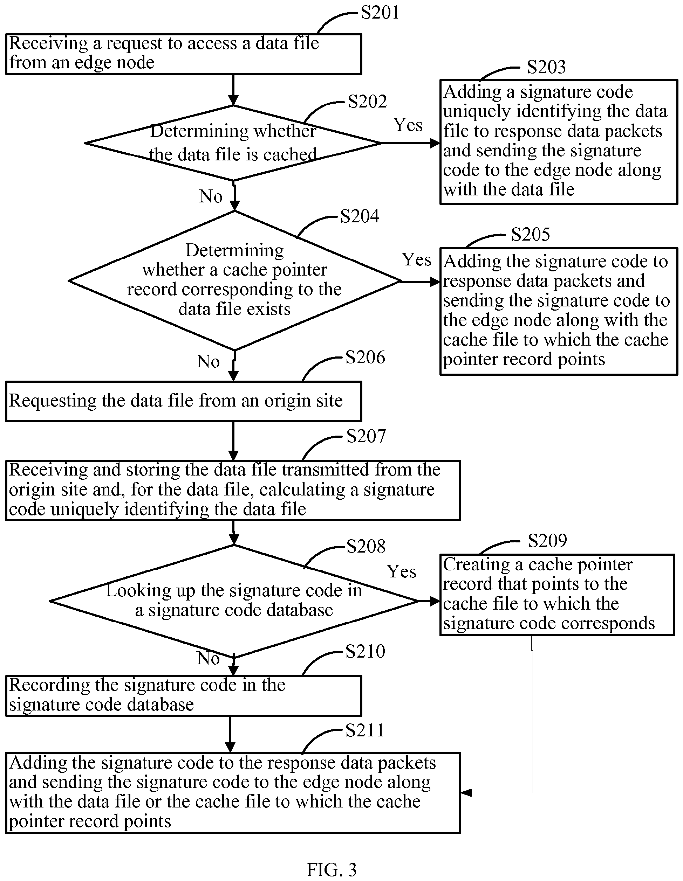

Referring to FIG. 3, FIG. 3 illustrates a flow chart of an exemplary data transmission method of an intermediate node according to disclosed embodiments.

At S201, a request to access a data file is received from an edge node.

In one embodiment, the intermediate node may receive a request to access a data file from an edge node. As can be seen at S116 shown in FIG. 2, when the edge node has neither the requested data file cached nor a corresponding cache pointer record, the edge node may send a request to the intermediate node with the expectation to obtain the user agent requested data file a.abc.com/a.avi from the intermediate node.

At S202, whether the data file is cached is determined.

In one embodiment, the intermediate node may determine whether the data file a.abc.com/a.avi is cached.

When it is determined that the data file is cached, at S203, a signature code uniquely identifying the data file is added to response data packets, and is sent to the edge node along with the data file.

For example, when it is determined that the data file a.abc.com/a.avi is cached, the intermediate node may add a signature code uniquely identifying the data file a.abc.com/a.avi to response data packets, and may send the signature code along with the data file a.abc.com/a.avi to the edge node. The signature code included in the response data packets may be used to determine whether the same signature code is present in the local signature code database in the edge node when the edge node is receiving the response data packets, that is, to determine whether the edge node already has a cache file having the same content as the data file received from the intermediate node.

When it is determined that the data file is not cached, at S204, whether a cache pointer record corresponding to the data file exists is determined.

In one embodiment, when it is determined that the data file is not cached, the intermediate node may determine whether a cache pointer record corresponding to the data file a.abc.com/a.avi exists. In one embodiment, the data file a.abc.com/a.avi and the data file a.bcd.com/a.avi may include the completely same content. When the intermediate node stores the data files in the local hard disk, the complete data file a.bcd.com/a.avi and only a cache pointer record corresponding to the data file a.abc.com/a.avi may be stored. The actual data file a.abc.com/a.avi may not be stored. The cache pointer record may point to the complete data file a.bcd.com/a.avi.

When it is determined that the cache pointer record is present, at S205, the signature code is added to response data packets, and is sent to the edge node along with the cache file to which the cache pointer record points.

In one embodiment, when it is determined that the cache pointer record is present, the intermediate node may find the cache file a.bcd.com/a.avi using the cache pointer record, and may add the signature code to the response data packets. The signature code may be included in the header of the first data packet in the response data packets, and may be sent to the edge node along with the cache file a.bcd.com/a.avi in response to the edge node's request to access the data file a.abc.com/a.avi.

When it is determined that the cache pointer record is absent, at S206, the intermediate node requests the data file from an origin site.

In one embodiment, when it is determined that the corresponding data file is not cached and the cache pointer record is absent, it indicates that the intermediate node may have to seek assistance from the origin site to obtain the data file a.abc.com/a.avi requested by the edge node from the origin site.

At S207, the data file transmitted from the origin site is received and stored, and a signature code uniquely identifying the data file is calculated for the data file.

In one embodiment, the intermediate node may receive and store the data file a.abc.com/a.avi transmitted from the origin site, and may calculate a signature code of the data file a.abc.com/a.avi that uniquely identifies the data file a.abc.com/a.avi. In one embodiment, a hash algorithm may be used to calculate the signature code that uniquely identifies the data file a.abc.com/a.avi. For example, when the intermediate node obtains the data file from the origin site, the data file may be transmitted in a plurality of segments or data packets. Each time a segment of the data file with a pre-determined length is received, the data file segment with the pre-determined length may be calculated to obtain a hash value. A plurality of hash values may be obtained until the complete data file is received. The plurality of hash values may be arranged sequentially. A hash value may be calculated from the plurality of hash values to obtain the signature code of the data file.

At S208, the signature code is looked up in a signature code database.

In one embodiment, the intermediate node may look up the signature code in the local signature code database.

Generally, when the intermediate node is not a brand new node, that is, the intermediate node has already stored cache files, it is necessary to calculate the signature codes for the already cache files and perform initialization operations, such that the signature codes may be used to uniquely identify the data files, and may be used in the subsequent signature code lookup and comparison. In one embodiment, the intermediate node data transmission method may include the following steps.

The signature codes of all or a portion of the cache files may be initialized and calculated. When the signature codes of the cache files in the intermediate node are duplicated, only one copy of the cache files corresponding to the same signature code may be saved, and cache pointer records may be receptively created for the other cache files corresponding to the same signature code that points to the saved copy of the cache file. As such, the actual cache files having the same content may only occupy the memory space to store one copy of the cache files. The other cache files having the same content may be stored in the form of the cache pointer records, thereby substantially saving the memory space.

When it is determined that the signature code is present, at S209, a cache pointer record that points to the cache file to which the signature code corresponds is created.

In one embodiment, when it is determined that the signature code is present, the intermediate node may create a cache pointer record that points to the cache file to which the signature code corresponds. When another request to access the data file a.abc.com/a.avi is received, the cache pointer record may be used to respond to the edge node directly with the cache file a.bcd.com/a.avi.

When it is determined that the signature code is absent, at S210, the signature code is recorded in the signature code database.

In one embodiment, when it is determined that the signature code is absent, the intermediate node may not have a cache file having the same content as the requested data file a.abc.com/a.avi. The signature code may be recorded in the local signature code database. When another request to access the data file a.abc.com/a.avi is received, the signature code may be looked up and compared.

At S211, the signature code is added to the response data packets, and is sent to the edge node along with the data file or the cache file to which the cache pointer record points.

In one embodiment, the intermediate node may add the signature code to the response data packets, and may send the signature code to the edge node along with the data file a.abc.com/a.avi or the cache file a.bcd.com/a.avi pointed by the cache pointer record.

In the data transmission method provided by the embodiments of the present disclosure, the intermediate node uniquely identifies a data file using a signature code of the same. When the intermediate node is receiving the data file transmitted from the origin site, the signature code is looked up and compared to determine whether the requested data file matches any cache file to avoid duplicated transmission and duplicated storage of the data file that includes the same content as a cache file. Thus, the storage resource at the intermediate node may be saved. Further, when the intermediate node sends the data file to the edge node, the signature code is added to the response data packets, such that the connected edge node looks up and compares the signature code in the local signature code database to determine whether any cache file has the same content. The method may avoid the duplicated transmission of the data file, and may save the network transmission bandwidth.

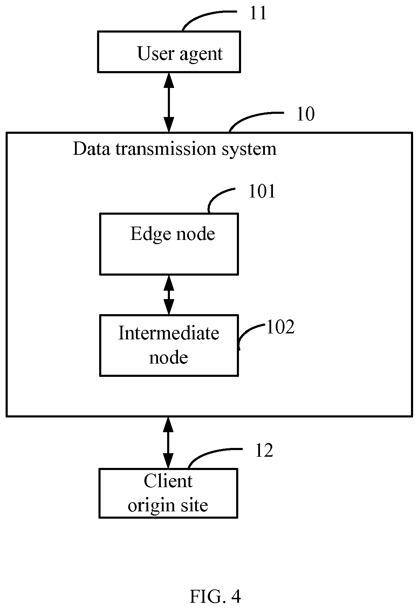

Referring to FIG. 4, FIG. 4 illustrates a schematic diagram of an exemplary data transmission system according to disclosed embodiments.

In one embodiment, as shown in FIG. 4, based on content delivery network, the data transmission system 10 may include an edge node 101 and an intermediate node 102 communicating with each other. The edge node 101 and the intermediate node 102 may be disposed between a user agent 11 and an origin site 12. The edge node 101 may communicate with the user agent 11. The intermediate node 102 may communicate with the origin site 12. Of course, the edge node 101 and the intermediate node 102 may include various types of servers. For example, the edge node 101 may include an edge server deployed on a user side, and the intermediate node 102 may include an intermediate server deployed on a network side, which is not limited by the present disclosure.

The edge node 101 may receive the request to access a data file from the user agent 11, and may request the data file from the intermediate node 102.

The intermediate node 102 may receive the request from the edge node 101, and may send the response data packets to the edge node 101. The response data packets may include a signature code uniquely identifying the data file.

The edge node 101 may look up the signature code in the signature code database. When the signature code is present, the edge node 101 may notify the intermediate node 102 to stop the transmission of the data file, create a cache pointer record that points to the data file corresponding to the signature code, and send the cache file to the user agent 11.

In one embodiment, the edge node 101 may look up the signature code in the signature code database. When the signature code is absent, the data file transmitted from the intermediate node 102 may be received and stored. The signature code may be recorded in the signature code database. The data file may be sent to the user agent 11.

In one embodiment, the intermediate node 102 may receive requests from the edge node 101.

In one embodiment, the intermediate node 102 may determine whether the data file is cached. When it is determined that the data file is cached, the signature code uniquely identifying the data file may be added to the response data packets, and may be sent to the edge node 101 along with the data file.

When it is determined that the data file is not cached, the intermediate node 102 may determine whether a cache pointer record corresponding to the data file exists. When it is determined that the cache pointer record is present, the cache file to which the cache pointer record points may be sent to the edge node 101. The signature code may be added to the response data packets, and may be sent to the edge node 101 along with the cache file.

In one embodiment, the intermediate node 102 may determine whether a cache pointer record corresponding to the data file exists. When it is determined that the cache pointer record is absent, the data file may be requested from the origin site 12.

In one embodiment, the intermediate node 102 may receive and store the data file transmitted from the origin site 12, and may calculate a signature code of the data file, which uniquely identifies the data file.

In one embodiment, the intermediate node 102 may look up the signature code in a signature code database. When the signature code is present, a cache pointer record may be created that points to the cache file to which the signature code corresponds. When the signature code is absent, the signature code may be recorded in the signature code database.

In one embodiment, the intermediate node 102 may add the signature code to the response data packets, and may send the signature code to the edge node 101 along with the data file or the cache file to which the cache pointer record points.

The process that the edge node 101 handles a request to access a data file may be the same as the process in the data transmission method of the edge node, and will not be repeated herein.

The process that the intermediate node 102 handles a request to access a data file may be the same as the process in the data transmission method of the intermediate node, and will not be repeated herein.

Moreover, the present disclosure also provides a computer storage medium. The computer storage medium may store computer executable instructions. The computer executable instructions may be used to implement the disclosed data transmission method of the edge node on a computer.

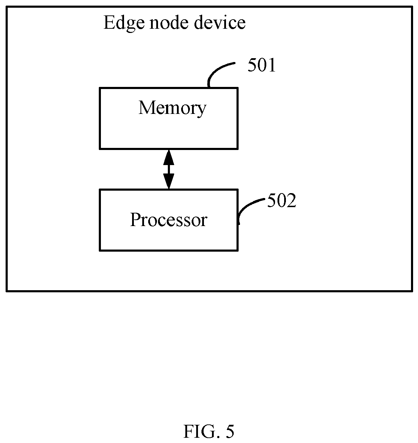

Referring to FIG. 5, FIG. 5 illustrates a schematic diagram of an exemplary edge node device according to disclosed embodiments. The edge node device may include a memory 501 configured to store program instructions and a processor 502 configured to retrieve the program instructions stored in the memory and to execute the retrieved program instructions to implement the disclosed data transmission method of the edge node.

Moreover, the present disclosure also provides a computer storage medium. The computer storage medium may store computer executable instructions. The computer executable instructions may be used to implement the disclosed data transmission method of the intermediate node on a computer.

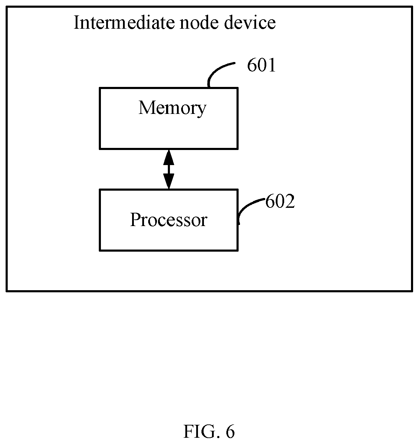

Referring to FIG. 6, FIG. 6 illustrates a schematic diagram of an exemplary intermediate node device according to disclosed embodiments. The intermediate node device may include a memory 601 configured to store program instructions and a processor 602 configured to retrieve the program instructions stored in the memory and to execute the retrieved program instructions to implement the disclosed data transmission method of the intermediate node.

The present disclosure provides the data transmission method and system, the computer storage medium, the edge node device, and the intermediate node device. The edge node and the intermediate node use the signature code to uniquely identify the data file and to avoid duplicated transmission and duplicated storage by applying the signature code comparison method. The highly efficient signature code transmission method substantially increases the speed of the data transmission, achieves sub-second instant transmission, causes substantially no interference to the existing data transmission and, at the same time, fully utilizes the existing cache files in the edge node. Thus, the storage resource at the edge node may be saved, and the network transmission bandwidth between the edge node and the intermediate node may be saved.

The system embodiments described above are merely for illustrative purpose. The units described as separated parts may or may not be physically detached. The parts displayed as units may or may not be physical units, i.e., may be located at one place, or distributed at a plurality of network units. Based on the actual needs, a part or all of the modules may be selected to achieve the objective of the embodiments. Those ordinarily skilled in the art may understand and implement the disclosed embodiments without contributing creative labor.

Through the descriptions of various aforementioned embodiments, those skilled in the art may clearly understand that the embodiments may be implemented by means of software in conjunction with an essential common hardware platform, or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, etc., and may include a plurality of instructions to enable a computer device (may be a personal computer, a server, or a network device) to execute the methods described in various embodiments or parts of the embodiments.

## Claims

1. A data transmission method, executed by an edge node (101), comprising:
receiving (S11, S111) a request to access a data file from a user agent (11);
requesting to access the data file from an intermediate node (102);
receiving (S12) response data packets of the data file from the intermediate node (102), wherein the response data packets include a signature code uniquely identifying the content of the data file;
looking up (S13) the signature code in a signature code database;
when the signature code is present, notifying (S14) the intermediate node (102) to stop transmission of the data file, and creating a cache pointer record that points to a cache file to which the signature code corresponds, wherein the cache file and the data file belong to different domain names; and
sending (S15) the cache file to the user agent (11), wherein the cache file is stored locally on the edge node (101).

2. The method of claim 1, further including:
when the signature code is absent, receiving and caching (S16) the data file transmitted from the intermediate node (102), recording the signature code in the signature code database, and sending the data file to the user agent (11).

3. The method of claim 1, before a step of requesting to access the data file from the intermediate node (102), further including:
determining (S112) whether the data file is cached;
when the data file is cached, sending (S113) the data file to the user agent (11);
when the data file is not cached, determining (S114) whether a cache pointer record corresponding to the data file exists;
when the cache pointer record is present, sending (S115) the cache file to which the cache pointer record points to the user agent (11); and
when the cache pointer record is absent, requesting (S116) to access the data file from the intermediate node (102).

4. The method of claim 1, further including:
initializing and calculating signature codes of all or a portion of cache files; and
when signature codes of certain cache files are duplicated, preserving one copy of the cache files corresponding to the duplicated signature code, and creating cache pointer records that point to the preserved copy of the cache file for other cache files corresponding to the duplicated signature code.

5. The method of claim 4, wherein a step of initializing and calculating signature codes of all or a portion of cache files specifically includes:
dividing the cache file into a plurality of segments according to a pre-determined segment length;
calculating a hash value for each segment of the cache file, respectively;
sequentially arranging a plurality of calculated hash values; and
calculating another hash value for the plurality of sequentially arranged hash values to obtain a signature code of the cache file.

6. A data transmission method, executed by an intermediate node (102), comprising:
receiving (S201) a request to access a data file from an edge node (101);
requesting (S206) to access the data file from an origin site (12);
receiving and storing (S207) the data file transmitted from the origin site (12), and for the data file, calculating a signature code uniquely identifying the content of the data file;
looking up (S208) the signature code in a signature code database;
when the signature code is present, creating (S209) a cache pointer record that points to a cache file to which the signature code corresponds, wherein the cache file and the data file belong to different domain names;
when the signature code is absent, recording (S210) the signature code in the signature code database; and
adding (S211) the signature code to response data packets, and sending the signature code to the edge node (101) along with the data file or the cache file to which the cache pointer record points; wherein the cache file is stored locally on the intermediate node (102).

7. The method of claim 6, before a step of requesting to access the data file from the origin site (12), further including:
determining whether the data file is cached (S202);
when the data file is cached, adding (S203) the signature code uniquely identifying the data file to the response data packets, and sending the signature code to the edge node (101) along with the data file;
when the data file is not cached, determining (S204) whether a cache pointer record corresponding to the data file exists;
when the cache pointer record is present, adding (S205) the signature code to the response data packets, and sending the signature code to the edge node (101) along with the cache file to which the cache pointer record points; and
when the cache pointer record is absent, requesting (S206) to access the data file from the origin site (12).

8. The method of claim 6, further including:
initializing and calculating signature codes of all or a portion of cache files; and
when signature codes of certain cache files are duplicated, preserving one copy of the cache files corresponding to the duplicated signature code, and creating cache pointer records that point to the preserved copy of the cache file for other cache files corresponding to the duplicated signature code.

9. The method of claim 6, wherein a step of, for the data file, calculating a signature code uniquely identifying the data file specifically includes:
each time a segment of the data file having a pre-determined segment length is received, calculating a hash value for the segment of the data file;
sequentially arranging a plurality of calculated hash values; and
calculating another hash value for the plurality of sequentially arranged hash values to obtain a signature code of the data file.

10. A data transmission system (10), comprising an edge node (101) and an intermediate node (102) communicating with each other, wherein:
the edge node (101) is configured to receive a request to access a data file from a user agent (11) and to request the data file from an intermediate node (102);
the intermediate node (102) is configured to communicate with the edge node (101), receive the request from the edge node (101), and send response data packets to the edge node (101);
the response data packets include a signature code uniquely identifying the content of the data file;
the edge node (101) looks up the signature code in a signature code database; and
when the signature code is present, the edge node (101) notifies the intermediate node (102) to stop the transmission of the data file, creates a cache pointer record that points to a cache file to which the signature code corresponds, sends the cache file to the user agent (11), wherein the cache file and the data file belong to different domain names and the cache file is stored locally on the edge node (101).

11. The system of claim 10, wherein:
the edge node (101) looks up the signature code in the signature code database; and
when the signature code is absent, the edge node (101) receives and caches the data file transmitted from the intermediate node (102), records the signature code in the signature code database, and sends the data file to the user agent (11).

12. The system of claim 10, wherein:
the intermediate node (102) receives the request from the edge node (101);
the intermediate node (102) determines whether the data file is cached;
when the data file is cached, the intermediate node (102) adds the signature code uniquely identifying the data file to the response data packets, and sends the signature code to the edge node (101) along with the data file;
when the data file is not cached, the intermediate node (102) determines whether a cache pointer record corresponding to the data file exists;
when the cache pointer record is present, the intermediate node (102) adds the signature code to the response data packets, and sends the signature code to the edge node (101) along with the cache file to which the cache pointer record points; and
when the cache pointer record is absent, the intermediate node (102) requests to access the data file from the origin site (12).

13. The system of claim 12, wherein:
the intermediate node (102) determines whether a cache pointer record corresponding to the data file exists, and when the cache pointer record is absent, the intermediate node (102) requests to access the data file from the origin site (12);
the intermediate node (102) receives and stores the data file transmitted from the origin site (12), and, for the data file, calculates a signature code uniquely identifying the data file;
the intermediate node (102) looks up the signature code in a signature code database;
when the signature code is present, the intermediate node (102) creates a cache pointer record that points to a cache file to which the signature code corresponds;
when the signature code is absent, the intermediate node (102) records the signature code in the signature code database; and
the intermediate node (102) adds the signature code to the response data packets, and sends the signature code to the edge node (101) along with the data file or the cache file to which the cache pointer record points.

14. An edge node device, comprising:
a memory (501) configured to store program instructions; and
a processor (502) configured to retrieve the program instructions stored in the memory and execute the program instructions to implement the data transmission method of any of claims 1-5.

15. An intermediate node device, comprising:
a memory (601) configured to store program instructions; and
a processor (602) configured to retrieve the program instructions stored in the memory and execute the program instructions to implement the data transmission method of any of claims 6-9.

## Patentansprüche

1. Datenübertragungsverfahren, das durch einen Edge-Knoten (101) ausgeführt wird, umfassend:
Empfangen (S11, S111) einer Anforderung von einem User Agent (11) auf eine Datendatei zuzugreifen;
Anfordern auf die Datendatei von einem Zwischenknoten (102) aus zuzugreifen;
Empfangen (S12) von Antwortdatenpaketen der Datendatei von dem Zwischenknoten (102), wobei die Antwortdatenpakete einen den Inhalt der Datendatei eindeutig identifizierenden Signaturcode beinhalten;
Nachschlagen (S13) des Signaturcodes in einer Signaturcodedatenbank;
wenn der Signaturcode vorhanden ist, Benachrichtigen (S14) des Zwischenknotens (102) die Übertragung der Datendatei zu stoppen, und Erstellen eines Zwischenspeicher-Zeigerdatensatzes, der auf eine Zwischenspeicherdatei verweist, der dem Signaturcode entspricht, wobei die Zwischenspeicherdatei und die Datendatei zu verschiedenen Domainnamen gehören; und
Senden (S15) der Zwischenspeicherdatei an den User Agent (11), wobei die Zwischenspeicherdatei lokal auf dem Edge-Knoten (101) gespeichert ist.

2. Verfahren nach Anspruch 1, ferner beinhaltend:
wenn der Signaturcode fehlt, Empfangen und Zwischenspeichern (S16) der von dem Zwischenknoten (102) übertragenen Datendatei, Aufzeichnen des Signaturcodes in der Signaturcodedatenbank, und Senden der Datendatei an den User Agent (11).

3. Verfahren nach Anspruch 1, vor einem Schritt des Anforderns auf die Datendatei von dem Zwischenknoten (102) zuzugreifen, ferner beinhaltend:
Bestimmen (S112), ob die Datendatei zwischengespeichert ist;
wenn die Datendatei zwischengespeichert ist, Senden (S113) der Datendatei an den User Agent (11);
wenn die Datendatei nicht zwischengespeichert ist, Bestimmen (S114), ob ein der Datendatei entsprechender Zwischenspeicher-Zeigerdatensatz vorhanden ist;
wenn der Zwischenspeicher-Zeigerdatensatz vorhanden ist, Senden (S115) der Zwischenspeicherdatei, auf die der Zwischenspeicher-Zeigerdatensatz verweist, an den User Agent (11); und
wenn der Zwischenspeicher-Zeigerdatensatz fehlt, Anfordern (S116) auf die Datendatei von dem Zwischenknoten (102) zuzugreifen.

4. Verfahren nach Anspruch 1, ferner beinhaltend:
Initialisieren und Berechnen von Signaturcodes aller oder eines Anteils der Zwischenspeicherdateien; und
wenn Signaturcodes bestimmter Zwischenspeicherdateien dupliziert sind, Beibehalten einer Kopie der dem duplizierten Signaturcode entsprechenden Zwischenspeicherdateien, und Erstellen von Zwischenspeicher-Zeigerdatensätzen, die auf die beibehaltene Kopie der Zwischenspeicherdatei für andere dem duplizierten Signaturcode entsprechenden Zwischenspeicherdateien verweisen.

5. Verfahren nach Anspruch 4, wobei ein Schritt des Initialisierens und Berechnens von Signaturcodes aller oder eines Anteils der Zwischenspeicherdateien speziell beinhaltet:
Teilen der Zwischenspeicherdatei in eine Vielzahl von Segmenten gemäß einer zuvor bestimmten Segmentlänge;
Berechnen eines Hash-Werts für jedes Segment der jeweiligen Zwischenspeicherdatei;
fortlaufendes Anordnen einer Vielzahl von berechneten Hash-Werten; und
Berechnen eines anderen Hash-Werts für die Vielzahl von fortlaufend angeordneten Hash-Werten, um einen Signaturcode der Zwischenspeicherdatei zu erhalten.

6. Datenübertragungsverfahren, das durch einen Zwischenknoten (102) ausgeführt wird, umfassend:
Empfangen (S201) einer Anforderung auf eine Datendatei von einem Edge-Knoten (101) zuzugreifen;
Auffordern (S206) auf die Datendatei von einer Ursprungsstelle (12) zuzugreifen;
Empfangen und Speichern (S207) der von der Ursprungsstelle (12) übertragenen Datendatei, und für die Datendatei, Berechnen eines den Inhalt der Datendatei eindeutig identifizierenden Signaturcodes;
Nachschlagen (S208) des Signaturcodes in einer Signaturcodedatenbank;
wenn der Signaturcode vorhanden ist, Erstellen (S209) eines Zwischenspeicher-Zeigerdatensatzes, der auf eine Zwischenspeicherdatei verweist, der dem Signaturcode entspricht, wobei die Zwischenspeicherdatei und die Datendatei zu verschiedenen Domainnamen gehören;
wenn der Signaturcode fehlt, Aufzeichnen (S210) des Signaturcodes in der Signaturcodedatenbank; und
Hinzufügen (S211) des Signaturcodes zu Antwortdatenpaketen, und Senden des Signaturcodes an den Edge-Knoten (101) zusammen mit der Datendatei oder der Zwischenspeicherdatei, auf die der Zwischenspeicher-Zeigerdatensatz verweist;
wobei die Zwischenspeicherdatei lokal auf dem Zwischenknoten (102) gespeichert ist.

7. Verfahren nach Anspruch 6, vor einem Schritt des Anforderns auf die Datendatei von der Ursprungsstelle (12) zuzugreifen, ferner beinhaltend:
Bestimmen, ob die Datendatei zwischengespeichert ist (S202);
wenn die Datendatei zwischengespeichert ist, Hinzufügen (S203) des die Datendatei eindeutig identifizierenden Signaturcodes zu den Antwortdatenpaketen, und Senden des Signaturcodes an den Edge-Knoten (101) zusammen mit der Datendatei;
wenn die Datendatei nicht zwischengespeichert ist, Bestimmen (S204), ob ein der Datendatei entsprechender Zwischenspeicher-Zeigerdatensatz vorhanden ist;
wenn der Zwischenspeicher-Zeigerdatensatz vorhanden ist, Hinzufügen (S205) des Signaturcodes zu den Antwortdatenpaketen, und Senden des Signaturcodes an den Edge-Knoten (101) zusammen mit der Zwischenspeicherdatei, auf die der Zwischenspeicher-Zeigerdatensatz verweist; und
wenn der Zwischenspeicher-Zeigerdatensatz fehlt, Anfordern (S206) auf die Datendatei von der Ursprungsstelle (12) zuzugreifen.

8. Verfahren nach Anspruch 6, ferner beinhaltend:
Initialisieren und Berechnen von Signaturcodes aller oder eines Anteils der Zwischenspeicherdateien; und
wenn Signaturcodes bestimmter Zwischenspeicherdateien dupliziert sind, Beibehalten einer Kopie der dem duplizierten Signaturcode entsprechenden Zwischenspeicherdateien, und Erstellen von Zwischenspeicher-Zeigerdatensätzen, die auf die beibehaltene Kopie der Zwischenspeicherdatei für andere dem duplizierten Signaturcode entsprechenden Zwischenspeicherdateien verweisen.

9. Verfahren nach Anspruch 6, wobei ein Schritt zum Berechnen, für die Datendatei, eines die Datendatei eindeutig identifizierenden Signaturcodes, speziell beinhaltet:
jedes Mal, wenn ein Segment der Datendatei, das eine zuvor bestimmte Segmentlänge aufweist, empfangen wird, Berechnen eines Hash-Werts für das Segment der Datendatei;
fortlaufendes Anordnen einer Vielzahl von berechneten Hash-Werten; und
Berechnen eines anderen Hash-Werts für die Vielzahl von fortlaufend angeordneten Hash-Werten, um einen Signaturcode der Datendatei zu erhalten.

10. Datenübertragungssystem (10), umfassend einen Edge-Knoten (101) und einen Zwischenknoten (102), die miteinander kommunizieren, wobei:
der Edge-Knoten (101) konfiguriert ist, eine Anforderung von einem User Agent (11), auf eine Datendatei zuzugreifen, zu empfangen und die Datendatei von einem Zwischenknoten (102) anzufordern;
der Zwischenknoten (102) konfiguriert ist, mit dem Edge-Knoten (101) zu kommunizieren, die Anforderung von dem Edge-Knoten (101) zu empfangen, und Antwortdatenpakete an den Edge-Knoten (101) zu senden;
die Antwortdatenpakete einen die Datendatei eindeutig identifizierenden Signaturcode beinhalten;
der Edge-Knoten (101) den Signaturcode in einer Signaturcodedatenbank nachschlägt; und
wenn der Signaturcode vorhanden ist, der Edge-Knoten (101) den Zwischenknoten (102) benachrichtigt die Übertragung der Datendatei zu stoppen, einen Zwischenspeicher-Zeigerdatensatz erstellt, der auf eine Zwischenspeicherdatei verweist, der dem Signaturcode entspricht, und die Zwischenspeicherdatei an den User Agent (11) sendet, wobei die Zwischenspeicherdatei und die Datendatei zu verschiedenen Domainnamen gehören und die Zwischenspeicherdatei lokal auf dem Edge-Knoten (101) gespeichert ist.

11. System nach Anspruch 10, wobei:
der Edge-Knoten (101) den Signaturcode in der Signaturcodedatenbank nachschlägt; und
wenn der Signaturcode fehlt, der Edge-Knoten (101) die von dem Zwischenknoten (102) übertragene Datendatei empfängt und zwischenspeichert, den Signaturcode in der Signaturcodedatenbank aufzeichnet, und die Datendatei an den User Agent (11) sendet.

12. System nach Anspruch 10, wobei:
der Zwischenknoten (102) die Anforderung von dem Edge-Knoten (101) empfängt;
der Zwischenknoten (102) bestimmt, ob die Datendatei zwischengespeichert ist;
wenn die Datendatei zwischengespeichert ist, der Zwischenknoten (102) den die Datei eindeutig identifizierenden Signaturcode zu den Antwortdatenpaketen hinzufügt, und den Signaturcode zusammen mit der Datendatei an den Edge-Knoten (101) sendet;
wenn die Datendatei nicht zwischengespeichert ist, der Zwischenknoten (102) bestimmt, ob ein der Datendatei entsprechender Zwischenspeicher-Zeigerdatensatz vorhanden ist;
wenn der Zwischenspeicher-Zeigerdatensatz vorhanden ist, der Zwischenknoten (102) den Signaturcode zu den Antwortdatenpaketen hinzufügt, und den Signaturcode zusammen mit der Zwischenspeicherdatei, auf die der Zwischenspeicher-Zeigerdatensatz verweist, an den Edge-Knoten (101) sendet; und
wenn der Zwischenspeicher-Zeigerdatensatz fehlt, der Zwischenknoten (102) anfordert, auf die Datendatei von der Ursprungsstelle (12) zuzugreifen.

13. System nach Anspruch 12, wobei:
der Zwischenknoten (102) bestimmt, ob ein der Datendatei entsprechender Zwischenspeicher-Zeigerdatensatz vorhanden ist, und wenn der Zwischenspeicher-Zeigerdatensatz fehlt, der Zwischenknoten (102) anfordert, auf die Datendatei von der Ursprungsstelle (12) zuzugreifen;
der Zwischenknoten (102) die von dem Ursprungsort (12) übertragene Datendatei empfängt und speichert, und, für die Datendatei, einen die Datendatei eindeutig identifizierenden Signaturcode berechnet;
der Zwischenknoten (102) den Signaturcode in einer Signaturcodedatenbank nachschlägt;
wenn der Signaturcode vorhanden ist, der Zwischenknoten (102) einen Zwischenspeicher-Zeigerdatensatz erstellt, der auf eine Zwischenspeicherdatei verweist, der dem Signaturcode entspricht;
wenn der Signaturcode fehlt, der Zwischenknoten (102) den Signaturcode in der Signaturcodedatenbank aufzeichnet; und
der Zwischenknoten (102) den Signaturcode zu den Antwortdatenpaketen hinzufügt, und den Signaturcode zusammen mit der Datendatei oder der Zwischenspeicherdatei, auf die der Zwischenspeicher-Zeigerdatensatz verweist, an den Edge-Knoten (101) sendet.

14. Edge-Knotenvorrichtung, umfassend:
einen Speicher (501), der konfiguriert ist, Programmanweisungen zu speichern; und
einen Prozessor (502), der konfiguriert ist, die in dem Speicher gespeicherten Programmanweisungen abzurufen und die Programmanweisungen auszuführen, um das Datenübertragungsverfahren nach einem der Ansprüche 1-5 zu implementieren.

15. Zwischenknotenvorrichtung, umfassend:
einen Speicher (601), der konfiguriert ist, Programmanweisungen zu speichern; und
einen Prozessor (602), der konfiguriert ist, die in dem Speicher gespeicherten Programmanweisungen abzurufen und die Programmanweisungen auszuführen, um das Datenübertragungsverfahren nach einem der Ansprüche 6-9 zu implementieren.

## Revendications

1. Procédé de transmission de données, exécuté par un nœud périphérique (101), comprenant :
la réception (S11, S111) d'une demande d'accès à un fichier de données en provenance d'un agent utilisateur (11) ;
la demande d'accès au fichier de données à partir d'un nœud intermédiaire (102) ;
la réception (S12) de paquets de données de réponse provenant du fichier de données du nœud intermédiaire (102), les paquets de données de réponse comportant un code de signature identifiant de manière unique le contenu du fichier de données ;
la recherche (S13) du code de signature dans une base de données de codes de signature ;
lorsque le code de signature est présent, le fait de donner notification (S14) au nœud intermédiaire (102) pour qu'il arrête la transmission du fichier de données, et la création d'un enregistrement de pointeur de cache qui pointe vers un fichier de cache auquel correspond le code de signature, le fichier de cache et le fichier de données appartenant à différents noms de domaine ; et
l'envoi (S15) du fichier de cache à l'agent utilisateur (11), le fichier de cache étant stocké localement sur le nœud périphérique (101).

2. Procédé selon la revendication 1, comportant en outre :
lorsque le code de signature est absent, la réception et la mise en cache (S16) du fichier de données transmis par le nœud intermédiaire (102),
l'enregistrement du code de signature dans la base de données de codes de signature, et
l'envoi du fichier de données à l'agent utilisateur (11).

3. Procédé selon la revendication 1, avant une étape de demande d'accès au fichier de données au nœud intermédiaire (102), comportant en outre :
la détermination du fait de savoir (S112) si le fichier de données est mis en cache ;
lorsque le fichier de données est mis en cache, l'envoi (S113) du fichier de données à l'agent utilisateur (11) ;
lorsque le fichier de données n'est pas mis en cache, la détermination du fait de savoir (S114) si un enregistrement de pointeur de cache correspondant au fichier de données existe ;
lorsque l'enregistrement de pointeur de cache est présent, l'envoi (S115) du fichier de cache vers lequel pointe l'enregistrement de pointeur de cache à l'agent utilisateur (11) ; et
lorsque l'enregistrement de pointeur de cache est absent, la demande (S116) d'accès au fichier de données au nœud intermédiaire (102).

4. Procédé selon la revendication 1, comportant en outre :
l'initialisation et le calcul de codes de signature de l'ensemble ou d'une partie de fichiers de cache ; et
lorsque les codes de signature de certains fichiers de cache sont dupliqués, la conservation d'une copie des fichiers de cache correspondant au code de signature dupliqué et la création d'enregistrements de pointeur de cache qui pointent vers la copie conservée du fichier de cache pour les autres fichiers de cache correspondant au code de signature dupliqué.

5. Procédé selon la revendication 4, dans lequel une étape d'initialisation et de calcul de codes de signature de l'ensemble ou d'une partie des fichiers de cache comporte spécifiquement :
la division du fichier de cache en une pluralité de segments selon une longueur de segment prédéterminée ;
le calcul d'une valeur de hachage pour chaque segment du fichier de cache, respectivement ;
la disposition séquentielle d'une pluralité de valeurs de hachage calculées ; et
le calcul d'une autre valeur de hachage pour la pluralité de valeurs de hachage disposées séquentiellement pour obtenir un code de signature du fichier de cache.

6. Procédé de transmission de données, exécuté par un nœud intermédiaire (102), comprenant :
la réception (S201) d'une demande d'accès à un fichier de données provenant d'un nœud périphérique (101) ;
la demande (S206) d'accès au fichier de données à un site d'origine (12) ;
la réception et le stockage (S207) du fichier de données transmis par le site d'origine (12), et pour le fichier de données, le calcul d'un code de signature identifiant de manière unique le contenu du fichier de données ;
la recherche (S208) du code de signature dans une base de données de codes de signature ;
lorsque le code de signature est présent, la création (S209) d'un enregistrement de pointeur de cache qui pointe vers un fichier de cache auquel correspond le code de signature, le fichier de cache et le fichier de données appartenant à des noms de domaine différents ;
lorsque le code de signature est absent, l'enregistrement (S210) du code de signature dans la base de données de codes de signature ; et
l'ajout (S211) du code de signature à des paquets de données de réponse, et l'envoi du code de signature au nœud périphérique (101) avec le fichier de données ou le fichier de cache vers lequel pointe le pointeur de cache ; le fichier de cache étant stocké localement sur le nœud intermédiaire (102).

7. Procédé selon la revendication 6, avant une étape de demande d'accès au fichier de données au site d'origine (12), comportant en outre :
la détermination du fait de savoir si le fichier de données est mis en cache (S202) ;
lorsque le fichier de données est mis en cache, l'ajout (S203) du code de signature identifiant de manière unique le fichier de données aux paquets de données de réponse, et l'envoi du code de signature au nœud périphérique (101) avec le fichier de données ;
lorsque le fichier de données n'est pas mis en cache, la détermination du fait de savoir (S204) si un enregistrement de pointeur de cache correspondant au fichier de données existe ;
lorsque l'enregistrement de pointeur de cache est présent, l'ajout (S205) du code de signature aux paquets de données de réponse, et l'envoi du code de signature au nœud périphérique (101) avec le fichier de cache vers lequel pointe l'enregistrement de pointeur de cache ; et
lorsque l'enregistrement de pointeur de cache est absent, la demande (S206) d'accès au fichier de données au site d'origine (12).

8. Procédé selon la revendication 6, comportant en outre :
l'initialisation et le calcul de codes de signature de l'ensemble ou d'une partie de fichiers de cache ; et
lorsque les codes de signature de certains fichiers de cache sont dupliqués, la conservation d'une copie des fichiers de cache correspondant au code de signature dupliqué et la création d'enregistrements de pointeur de cache qui pointent vers la copie conservée du fichier de cache pour les autres fichiers de cache correspondant au code de signature dupliqué.

9. Procédé selon la revendication 6, dans lequel une étape de calcul, pour le fichier de données, d'un code de signature identifiant de manière unique le fichier de données comporte spécifiquement :
chaque fois qu'un segment du fichier de données ayant une longueur de segment prédéterminée est reçu, le calcul d'une valeur de hachage pour le segment du fichier de données ;
la disposition séquentielle d'une pluralité de valeurs de hachage calculées ; et
le calcul d'une autre valeur de hachage pour la pluralité de valeurs de hachage disposées séquentiellement pour obtenir un code de signature du fichier de données.

10. Système de transmission de données (10), comprenant un nœud périphérique (101) et un nœud intermédiaire (102) communiquant entre eux, dans lequel :
le nœud périphérique (101) est configuré pour recevoir une demande d'accès à un fichier de données provenant d'un agent utilisateur (11) et pour demander le fichier de données à un nœud intermédiaire (102) ;
le nœud intermédiaire (102) est configuré pour communiquer avec le nœud périphérique (101), recevoir la demande du nœud périphérique (101) et envoyer des paquets de données de réponse au nœud périphérique (101) ;
les paquets de données de réponse comportent un code de signature identifiant de manière unique le contenu du fichier de données ;
le nœud périphérique (101) recherche le code de signature dans une base de données de codes de signature ; et
lorsque le code de signature est présent, le nœud périphérique (101) donne notification au nœud intermédiaire (102) pour qu'il arrête la transmission du fichier de données, crée un enregistrement de pointeur de cache qui pointe vers un fichier de cache auquel correspond le code de signature, envoie le fichier de cache à l'agent utilisateur (11),
le fichier de cache et le fichier de données appartiennent à différents noms de domaine et le fichier de cache étant stocké localement sur le nœud périphérique (101).

11. Système selon la revendication 10, dans lequel :
le nœud périphérique (101) recherche le code de signature dans la base de données de codes de signature ; et
lorsque le code de signature est absent, le nœud périphérique (101) reçoit et met en cache le fichier de données transmis par le nœud intermédiaire (102), enregistre le code de signature dans la base de données de codes de signature et envoie le fichier de données à l'agent utilisateur (11).

12. Système selon la revendication 10, dans lequel :
le nœud intermédiaire (102) reçoit la demande du nœud périphérique (101) ;
le nœud intermédiaire (102) détermine si le fichier de données est mis en cache ;
lorsque le fichier de données est mis en cache, le nœud intermédiaire (102) ajoute le code de signature identifiant de manière unique le fichier de données aux paquets de données de réponse, et envoie le code de signature au nœud périphérique (101) avec le fichier de données ;
lorsque le fichier de données n'est pas mis en cache, le nœud intermédiaire (102) détermine si un enregistrement de pointeur de cache correspondant au fichier de données existe ;
lorsque l'enregistrement de pointeur de cache est présent, le nœud intermédiaire (102) ajoute le code de signature aux paquets de données de réponse et envoie le code de signature au nœud périphérique (101) avec le fichier de cache vers lequel pointe l'enregistrement de pointeur de cache ; et
lorsque l'enregistrement de pointeur de cache est absent, le nœud intermédiaire (102) demande l'accès au fichier de données au site d'origine (12).

13. Système selon la revendication 12, dans lequel :
le nœud intermédiaire (102) détermine si un enregistrement de pointeur de cache correspondant au fichier de données existe, et lorsque l'enregistrement de pointeur de cache est absent, le nœud intermédiaire (102) demande l'accès au fichier de données au site d'origine (12) ;
le nœud intermédiaire (102) reçoit et stocke le fichier de données transmis depuis le site d'origine (12) et, pour le fichier de données, calcule un code de signature identifiant de manière unique le fichier de données ;
le nœud intermédiaire (102) recherche le code de signature dans une base de données de codes de signature ;
lorsque le code de signature est présent, le nœud intermédiaire (102) crée un enregistrement de pointeur de cache qui pointe vers un fichier de cache auquel correspond le code de signature ;
lorsque le code de signature est absent, le nœud intermédiaire (102) enregistre le code de signature dans la base de données de codes de signature ; et
le nœud intermédiaire (102) ajoute le code de signature aux paquets de données de réponse et envoie le code de signature au nœud périphérique (101) avec le fichier de données ou le fichier de cache vers lequel pointe l'enregistrement de pointeur de cache.

14. Dispositif nœud périphérique, comprenant :
une mémoire (501) configurée pour stocker des instructions de programme ; et
un processeur (502) configuré pour récupérer les instructions de programme stockées dans la mémoire et exécuter les instructions de programme pour mettre en œuvre le procédé de transmission de données selon l'une quelconque des revendications 1 à 5.

15. Dispositif nœud intermédiaire, comprenant :
une mémoire (601) configurée pour stocker des instructions de programme ; et
un processeur (602) configuré pour récupérer les instructions de programme stockées dans la mémoire et exécuter les instructions de programme pour mettre en œuvre le procédé de transmission de données selon l'une quelconque des revendications 6 à 9.
